# EUROPEAN PATENT SPECIFICATION

(11) **EP 1 830 975 B1**
(45) Date of publication and mention of the grant of the patent: **24.04.2013**
(21) Application number: 05825444.2
(22) Date of filing: 13.12.2005
(51) Int. Cl.: B21D 53/14, F16G 5/16

(54) **METHOD FOR FORMING A TRANSVERSE ELEMENT FOR A PUSH BELT FOR A CONTINUOUSLY VARIABLE TRANSMISSION**
VERFAHREN ZUR HERSTELLUNG EINES QUERELEMENTS FÜR EINEN SCHUBRIEMEN FÜR EIN STUFENLOSES GETRIEBE
PROCEDE POUR FORMER UN ELEMENT TRANSVERSAL POUR UNE COURROIE DE POUSSEE D'UNE TRANSMISSION A VARIATION CONTINUE

(30) Priority: 17.12.2004 NL 1027808
(43) Date of publication of application: 12.09.2007
(73) Proprietor: ROBERT BOSCH GMBH, 70442 Stuttgart (DE)
(72) Inventor: MUTSAERS, Robert, Arnoldus, Andreas, NL-5062 LV Oisterwijk (NL); FEIJTEL, Jasper, NL-3319 GE Dordrecht (NL); PRINSEN, Lucas, Hendricus, Robertus, Maria, NL-5062 LV Oisterwijk (NL)
(74) Representative: Dekker-Garms, Alwine Emilie
(86) International application number: PCT/NL2005/000856
(87) International publication number: WO 2006/065116

(56) References cited:
- EP-A- 0 381 258
- EP-A- 0 994 275
- WO-A-02/061304
- WO-A-2004/004942

## Description

The invention relates to a method for forming a transverse element which is destined to be part of a push belt for a continuously variable transmission, wherein the push belt is shaped like a closed loop, and wherein the continuously variable transmission has two pulleys for suspending the push belt, which transverse element comprises two main body surfaces and a circumferential surface extending between the main body surfaces, wherein the circumferential surface comprises two pulley sheave contacting surfaces for establishing contact between the transverse element and pulley sheaves of a pulley of the continuously variable transmission, which pulley sheave contacting surfaces are located at opposite sides of the transverse element;
wherein the transverse element is blanked out of basic material during a blanking movement by applying a cutting member, a supporting member and a mould having a receiving space for receiving the transverse element to be blanked, the supporting member and an end of the cutting member;
wherein, during a blanking movement, the transverse element to be blanked is clamped between the cutting member and the supporting member, wherein the cutting member, the transverse element to be blanked and the supporting member on the one hand, and the mould on the other hand, are moved with respect to each other;
wherein two relief flanks of the mould, which are part of an inner surface of the receiving space in the mould, are provided with a relief for forming a predefined relief in the pulley sheave contacting surfaces of the transverse element;
wherein the relief in the relief flanks of the mould comprises a pattern of alternating ribs and grooves, which are extending in a direction similar to a direction in which the cutting member, the transverse element to be blanked and the supporting member on the one hand, and the mould on the other hand, are moved with respect to each other, during a blanking movement.

A push belt for a continuously variable transmission is generally known. Usually, such a push belt comprises two endless, ribbon-like carriers shaped like a closed loop for carrying a relatively large number of transverse elements. The transverse elements are movably arranged along the entire circumference of the carriers, wherein, during operation, they are able to transmit forces which are related to a movement of the push belt.

In the following description of the transverse element, the directions as mentioned refer to the situation in which the transverse element is part of the push belt. A longitudinal direction of the transverse element corresponds to a circumferential direction of the push belt. A vertical transverse direction of the transverse element corresponds to a radial direction of the push belt. A horizontal transverse direction of the transverse element corresponds to a direction perpendicular to both the longitudinal direction and the vertical transverse direction. The indication of any transverse element as subsequent transverse element or previous transverse element with respect to an adjacent transverse element is related to a direction of movement of the push belt.

In the horizontal transverse direction, at opposite sides, the transverse element is provided with recesses for receiving the carriers. For the purpose of supporting the carriers, the transverse element comprises carrying surfaces. In the horizontal transverse direction, at opposite sides, for the purpose of contact between the transverse element and pulley sheaves of a pulley of a continuously variable transmission, the transverse element is provided with pulley sheave contacting surfaces, which are divergent in the direction of the carrying surfaces. The terms "top" and "bottom", which are hereinafter applied, are related to the direction of divergence; this is defined as being from bottom to top.

In the vertical transverse direction, from bottom to top, the transverse element comprises successively a basic portion, a neck portion and a top portion, wherein, in the horizontal transverse direction, the dimensions of the neck portion are relatively small. The basic portion comprises the carrying surfaces and the pulley sheave contacting surfaces. In the push belt, the basic portion is located at the side of the inner circumference of the push belt, whereas the top portion is located at the side of the outer circumference of the push belt.

The transverse element has two main body surfaces, namely a front surface and a back surface, which are extending substantially parallel with respect to each other, substantially perpendicular to the longitudinal direction. At least a portion of the front surface of the transverse element is destined to contact at least a portion of the back surface of a subsequent transverse element in the push belt, whereas at least a portion of the back surface of the transverse element is destined to contact at least a portion of the front surface of a previous transverse element in the push belt. A circumferential surface, of which the carrying surfaces and the pulley sheave contacting surfaces are part, is extending between the two main body surfaces.

At the front surface of the transverse element, a projection is arranged, whereas in the back surface of the transverse element, a hole is arranged. The positions of the projection and the hole are corresponding to each other, wherein the projection and the hole are usually positioned at the top portion. In the push belt, the projection of any transverse element is at least partially located in the hole of a subsequent transverse element, so that a mutual displacement of adjacent transverse elements in a plane perpendicular to the circumferential direction of the push belt is prevented.

For the purpose of an optimal contact to the pulley sheaves, the pulley sheave contacting surfaces have a relief extending in the longitudinal direction, which may be corrugated or serrated, for example. Among other things, the relief serves for preventing the formation of an oil film between the pulley sheave contacting surfaces of the transverse element and the pulley sheaves, as a result of which slipping of the push belt with respect to the pulleys is prevented. Another advantageous effect of the application of a relief on the pulley sheave contacting surfaces of the transverse element is that small mutual differences in the dimensions of the transverse elements of a push belt may diminish during a process of running-in of push belt and pulleys, because the relief makes it possible that a small wear of the pulley sheave contacting surfaces takes place at places where the differences are the largest. In other words, pulleys and push belt may wear down with respect to each other, after which a good grip between the pulley sheave contacting surfaces of the transverse elements of the push belt and the pulley sheaves results, and the push belt is guided along the pulleys in an exceedingly stable fashion.

In fact, when the relief on the pulley sheave contacting surfaces of the transverse element is corrugated or serrated, for example, the relief comprises an alternating pattern of ribs and grooves, wherein tops of ribs initially have a relatively small surface, and therefore may relatively easily wear away a little in case of contact to a pulley sheave, as a result of which dimensional variations between the various transverse elements in the push belt are leveled out. In EP 0 994 275, a number of reliefs which are arranged at the pulley sheave contacting surfaces of transverse elements are described, wherein a sine-shaped relief is presented as a preferred embodiment.

By means of a blanking process, the transverse element is manufactured out of basic material shaped like a sheet. In the blanking process, a cutting member and a supporting member are applied, wherein the cutting member is destined to cut the transverse element out of the basic material under the influence of a cutting force, and wherein the supporting member is destined to support the transverse element by a supporting force during the blanking process, and also to form the front surface of the transverse element by means of a process of cold remodeling. The circumference of both the supporting surface and the cutting surface is substantially equal to the circumference of the transverse element. During the blanking process, the cutting member penetrates the basic material under the influence of pressure, wherein a mutual movement of the transverse element to be blanked and the basic material is allowed. At that moment, the transverse element to be blanked is clamped between the cutting member and the supporting member.

Furthermore, in the blanking process, a mould is applied, which is provided with a receiving space for receiving the transverse element to be blanked, the supporting member and an end of the cutting member. The inner circumference of the receiving space substantially corresponds to the circumference of the cutting member, the supporting member, as well as the transverse element to be blanked, so that the receiving space is capable of receiving the cutting member, the supporting member and the transverse element to be blanked, with an exceedingly small play.

In the blanking process, the shape and the dimensions of each of the pulley sheave contacting surfaces of the transverse element is determined by a relief flank of the mould. The desired relief on a pulley sheave contacting surface is determined by a relief on a relief flank which is destined for forming thereof, wherein the relief on the relief flank may be considered as a negative of the relief which is formed on the pulley sheave contacting surface as a positive. As has been noted before, according to the state of the art, the relief on the pulley sheave contacting surfaces is serrated or corrugated, and preferably sine-shaped in a direction substantially perpendicular to the longitudinal direction. Therefore, the relief on the relief flanks of the mould is also serrated or corrugated, and preferably sine-shaped in a direction substantially perpendicular to a direction in which the movement which is made by the transverse element and the mould with respect to each other during the blanking process takes place, and which will hereinafter be referred to as blanking movement direction. In other words, the relief flanks of the mould are provided with alternating ribs and grooves, which are extending parallel with respect to each other, in the blanking movement direction.

Accuracy of the dimensions of the transverse elements is very important. Especially, it is important that the thickness of a transverse element, i.e. the dimension of the transverse element in the longitudinal direction, is as much as possible constant in the horizontal transverse direction, and that the positions of the projections and the holes are equal on all transverse elements, so that, in the push belt, the transverse elements are capable of lining up in an as much as possible parallel and straight fashion.

Various components of a blanking device for manufacturing transverse elements are movably arranged with respect to each other. When the mould and the supporting member are moving with respect to each other, guidance of the supporting member also takes place along the relief flanks of the mould. As the relief flanks are provided with a serrated or corrugated, preferably sine-shaped relief, the contact between the supporting member and the mould is limited to contact lines between the tops of the ribs of the relief flanks and the locally flat supporting member.

During a first phase of the blanking process, the pressure on the cutting member and the supporting member is gradually increased, and a process of cold remodeling takes place on the main body surfaces of the transverse element, for the purpose of forming the projection and the hole of the transverse element, among other things. As a result of the forces to which the transverse element is subjected during the blanking.process, it may happen that the transverse element is inclined to tilt. During tilting, the supporting member presses against the relief flanks of the mould, wherein the pressure at the tops of the ribs of the relief flanks may become so high that a local elastic deformation, which is also known as Hertz's compression, of the relief on the relief flanks occurs. As a result, the stiffness of the guidance of the supporting member in the receiving space of the mould is decreased, which has the consequences that the positions of the projection and the hole are defined in a less unambiguous fashion, and that the thickness of the transverse element might not be equal among the width of the transverse element, so that the various transverse elements might not be situated parallel and straight behind one another when whey have been received in a push belt. During application of the push belt in a continuously variable transmission, these deviations may lead to additional undesirable wear and load of the transverse elements, which may result in breakage.

An important objective of the invention is improving the accuracy of the dimensions of the transverse elements in general, and of the thickness of a transverse element and the positions of the projection and the hole on the transverse element in particular. This objective ca be achieved by a method according to claim 1, a mould according to claim 3 and a transverse element according to claim 6. The invention provides a method for forming a transverse element, wherein a top part of the ribs of the relief in the relief flanks of the applied mould is substantially flat, wherein a valley part of the grooves of this relief is concavely curved, and wherein, in a direction perpendicular to the direction in which the grooves are extending, a ratio of a mutual distance between the substantially flat valley parts of the grooves and a dimension of the substantially flat valley parts is substantially 2:1.

An advantage of the application of the method according to the invention is that a larger contacting area between the supporting member and the relief flanks of the mould is realized, so that the pressure on the top parts of the ribs gets lower, in case of the same forces acting on the supporting member. A lower pressure leads to less or no Hertz's compression of the ribs. Hence, a lower pressure leads to less tilting of the supporting member. In general, applying a relief having a substantially flat top part of the ribs on the relief flanks of the mould leads to a diminished elasticity of the relief flanks, and, in the process, to an increased capability of the receiving space of remaining its shape, and an increased stiffness of the construction of the blanking device.

As a consequence of the measures of the present invention, transverse element having an increased accuracy can be blanked. In particular, it is achieved that the positions of the projection and the hole are more accurately defined, and that each transverse element has a more even thickness. As a result, the mutual positions and the parallelism of the transverse elements in a push belt will be improved, which brings with it further advantages in respect of application in a continuously variable transmission, such as less wear, a more efficient transmission, a higher maximum load, a longer lifespan, etc.

An additional advantage of the relief having the ribs having the substantially flat top parts is an increased resistance of the mould to wear. As a result of lower local pressures on the inner surface of the receiving space of the mould, a process of wearing out of the mould will take place at a slower rate, and it will be possible to use the mould in the blanking device while maintaining the minimum required accuracy for a longer period of time.

Besides the advantages as mentioned, it is possible to form the relief on the pulley sheave contacting surfaces of the transverse element in such a way that top parts of the ribs of this relief are round, and are substantially sine-shaped, for example. Such a shape of the top parts of the ribs is beneficial to a process of running in of the push belt on the pulleys, which has already been described. According to the invention, the round shape of the top parts of the ribs of the relief on the pulley sheave contacting surfaces of the transverse element is achieved because a valley part of the grooves of the relief in the relief flanks of the mould which is applied during the process of blanking the transverse element is concavely curved.

In any case, according to the invention, in a direction perpendicular to the blanking movement direction, a ratio of a mutual distance between the substantially flat top parts of the ribs of the relief in the relief flanks of the mould and a dimension of the substantially flat top parts is 2:1. By using such a relief, a good guidance of the supporting member in the mould is realized during the blanking process of the transverse element, while at the same time, a suitable relief is obtained in the pulley sheave contacting surfaces of the transverse element.

It is preferred when the valley parts of the grooves of the relief in the relief flanks of the mould are substantially curved according to a sine, in a direction perpendicular to the blanking movement direction, because by using such a relief, substantially sine-shaped tops of the relief on the pulley sheave contacting surfaces of the transverse element are obtained.

The invention will be explained on the basis of the following description of the invention with reference to the drawing, in which equal reference signs indicate equal or similar components, and in which:
figure 1 diagrammatically shows a side view of a continuously variable transmission having a push belt;
figure 2 shows a front view of a transverse element for a push belt for a continuously variable transmission;
figure 3 shows a side view of the transverse element as shown in figure 2;
figure 4 shows a diagrammatical longitudinal section of a blanking area of a blanking device, as well as of basic material placed in there;
figures 5a-5d show four successive stages of a blanking movement; figure 6 diagrammatically shows a top view of a mould and a supporting member which is accommodated in the mould;
figure 7a shows a detail of a relief flank of the mould as shown in figure 6, having a known relief;
figure 7b shows a detail of a relief flank of the mould as shown in figure 6, having a relief according to the invention; and
figure 8 shows a detail of a transverse element which is obtained by applying the method according to the invention.

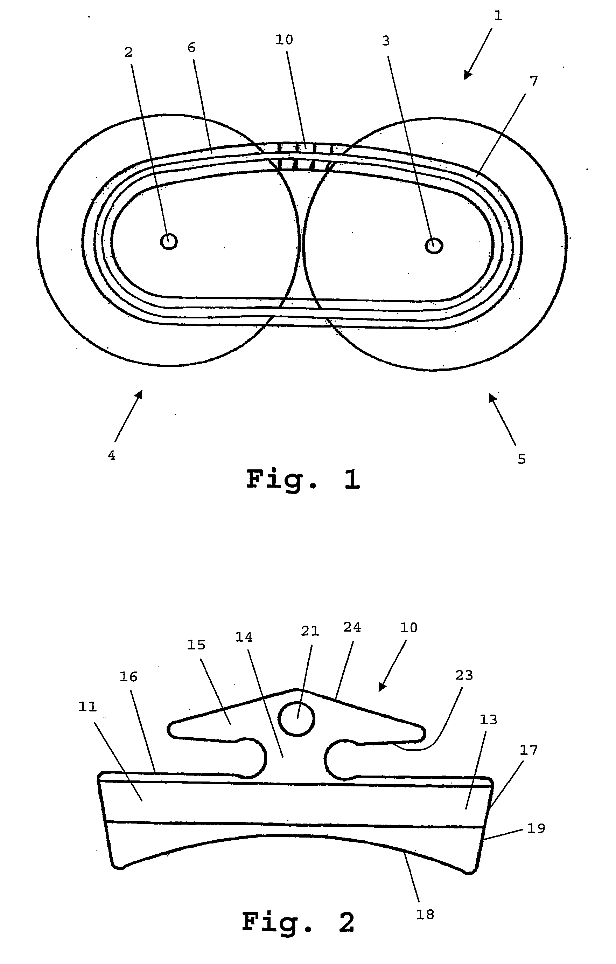

Figure 1 diagrammatically shows a continuously variable transmission, such as for utilization in a motor vehicle. The continuously variable transmission is indicated in general by the reference sign 1.

The continuously variable transmission 1 comprises two pulleys 4, 5 being arranged on separate pulley shafts 2, 3. An endless push belt 6 being shaped like a closed loop is arranged around the pulleys 4, 5, and serves for transmitting torque between the pulley shafts 2, 3. Each of the pulleys 4, 5 comprises two pulley sheaves, wherein the push belt 6 is positioned and clamped between said two pulley sheaves, so that with the help of friction a force may be transmitted between the pulleys 4, 5 and the push belt 6.

The push belt 6 comprises at least one endless carrier 7, which is usually composed of a number of rings. Along the entire length of the carrier 7, transverse elements 10 are arranged, wherein the transverse elements 10 are mutually adjacent to each other and are moveable with respect to the carrier 7 in the circumferential direction. For the sake of simplicity, only a number of these transverse elements 10 is shown in figure 1.

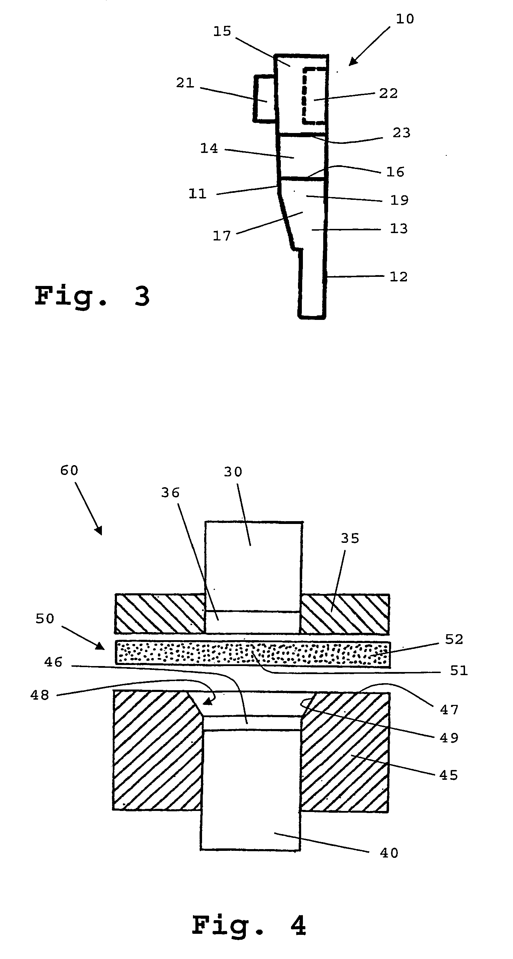

Figures 2 and 3 show a transverse element 10. A front surface of the transverse element 10 is indicated in general by the reference sign 11, whereas a back surface of the transverse element 10 is indicated in general by the reference sign 12. In the following, both the front surface 11 and the back surface 12 are also indicated as main body surface 11, 12. A circumferential surface 19 extends between the main body surfaces 11, 12.

In the vertical transverse direction, the transverse element 10 comprises successively a basic portion 13, a relatively narrow neck portion 14, and a top portion 15 shaped like the tip of an arrow. In the push belt 6, the basic portion 13 is located at the side of the inner circumference of the push belt 6, whereas the top portion 15 is located at the side of the outer circumference of the push belt 6. Furthermore, in a push belt 6, at least a portion of the front surface 11 of the transverse element 10 contacts at least a portion of the back surface 12 of a subsequent transverse element 10, whereas at least a portion of the back surface 12 of the transverse element 10 contacts at least a portion of the front surface 11 of a preceding transverse element 10. At the transition to the neck portion 14, the basic portion 13 of the transverse element 10 as shown in figure 2 comprises two carrying surfaces 16 which serve for supporting two carriers 7. Furthermore, the basic portion 13 comprises two pulley sheave contacting surfaces 17. When the transverse element 10 moves over the pulley 4, 5, contact between the transverse element 10 and contact surfaces of the pulley sheaves is realized through said pulley sheave contacting surfaces 17. A bottom surface 18 extends between the pulley sheave contacting surfaces 17. The carrying surfaces 16, the pulley sheave contacting surfaces 17, as well as the bottom surface 18 are part of the circumferential surface 19.

On the front surface 11 of the transverse element 10, a projection 21 is arranged. In the shown example, the projection 21 is located on the top portion 15, and corresponds to a hole in the back surface 12. In figure 3, the hole is depicted by means of dashed lines and indicated by the reference sign 22. In the push belt 6, the projection 21 of the transverse element 10 is at least partially located in the hole 22 of a subsequent transverse element 10. The projection 21 and the corresponding hole 22 serve to prevent mutual displacement of adjacent transverse elements 10 in a plane perpendicular to the circumferential direction of the push belt 6.

The top portion 15 comprises two retaining surfaces 23 which are located opposite to the carrying surfaces 16. When the transverse element 10 is arranged in a push belt 6, a space in which the carriers 7 are present is delimited by the carrying surfaces 16 on the one hand, and by the retaining surfaces 23 on the other hand, in the radial direction. Furthermore, the top portion 15 comprises two top surfaces 24 which are connected to each other. At an end, each of the top surfaces 24 is connected to a retaining surface 23 of the top portion 15. Both the retaining surfaces 23 and the top surfaces 24 are part of the circumferential surface 19.

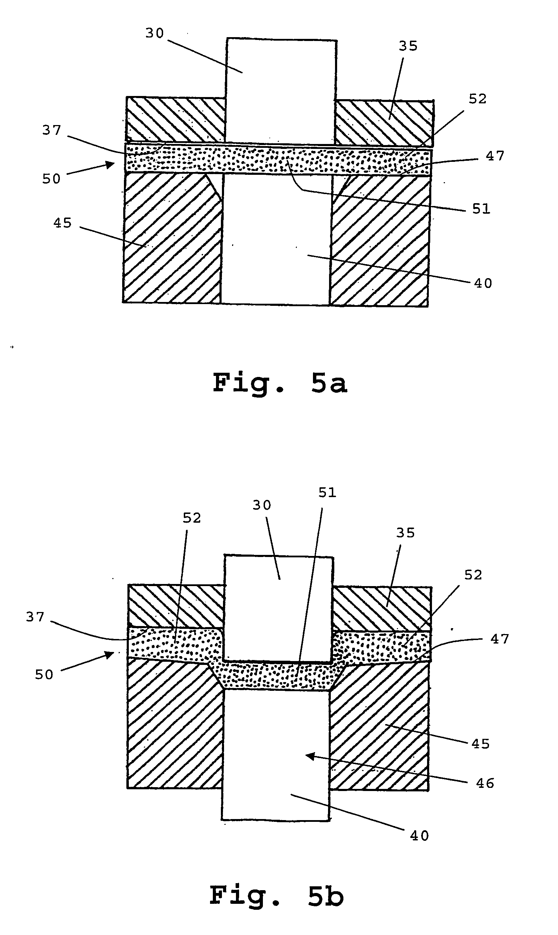

A blanking process known per se of the transverse element 10 will now be explained on the basis of figures 4 and 5a to 5d.

In figure 4, a blanking area of a blanking device 60 and basic material 50 being placed in there are diagrammatically depicted. The blanking device 60 comprises a cutting member 30 which is destined to cut the transverse element 10 out of the basic material 50. The cutting member 30 is accommodated in a guiding space 36 in a guiding plate 35, an important function of which is guiding the cutting member 30 during a blanking movement. A supporting member 40 is in line with the cutting member 30, which is destined to support the transverse element 10 during the blanking process, and also to form the front surface 11 of the transverse element 10 by means of a process of cold remodeling. The circumference of both the cutting member 30 and the supporting member 40 substantially corresponds to the circumference of the transverse element 10 to be blanked. The supporting member 40 is accommodated in a receiving space 46 in a mould 45, an important function of which is guiding both the supporting member 40 and the transverse element 10 during a blanking movement. The inner circumference of the receiving space 46 substantially corresponds to the circumference of the cutting member 30, the supporting member 40, as well as the transverse element 10. Initially, the basic material 50 is located between the cutting member 30 and the guiding plate 35 on the one hand, and the supporting member 40 and the mould 45 on the other hand. A portion of the basic material 50 which is located between the cutting member 30 and the supporting member 40 is destined to form the transverse element 10, and will hereinafter be referred to as blanking portion 51. Another portion of the basic material 50, namely the portion that is located between the guiding plate 35 and the mould 45, will hereinafter be referred to as rest portion 52.

The mould 45 comprises a mould surface 47, an important function of which is supporting the rest portion 52 of the basic material 50. An inner surface of the receiving space 46 of the mould 45 is connected to the mould surface 47, through a circumferential edge 48. In order to obtain a good surface quality of the circumferential surface 19 of the transverse element 10, the circumferential edge 48 is beveled, wherein a bevel surface 49 is extending between the mould surface 47 and the inner surface of the receiving space 46.

In the following, a blanking movement is described on the basis of figures 5a to 5d, in which different successive stages of the blanking movement are diagrammatically depicted.

In a first stage or initial stage, as diagrammatically shown in figure 5a, the blanking portion 51 of the basic material 50 is clamped between the cutting member 30 and the supporting member 40, while the rest portion 52 is clamped between a guiding surface 37 of the guiding plate 35 and the mould surface 47 of the mould 45. In the process, the clamping forces act in a direction substantially perpendicular to the guiding surface 37 and the mould surface 47.

In a second stage, as diagrammatically shown in figure 5b, the guiding plate 35, the rest portion 52 and the mould 45 on the one hand, and the entirety of cutting member 30, blanking portion 51 and supporting member 40 on the other hand, are moved with respect to each other, under the influence of pressure. In the process, the direction of movement is substantially perpendicular to the guiding surface 37 and the mould surface 47. As a result of the mutual movement, the cutting member 30 penetrates the basic material 50, and the blanking portion 51 is pressed into the receiving space 46 of the mould 45. During the second stage, at the position of the contact between the blanking portion 51 and the cutting member 30 and the supporting member 40, respectively, a process of cold remodeling takes place as well, wherein, among other things, the hole 22 and the projection 21 are formed, respectively.

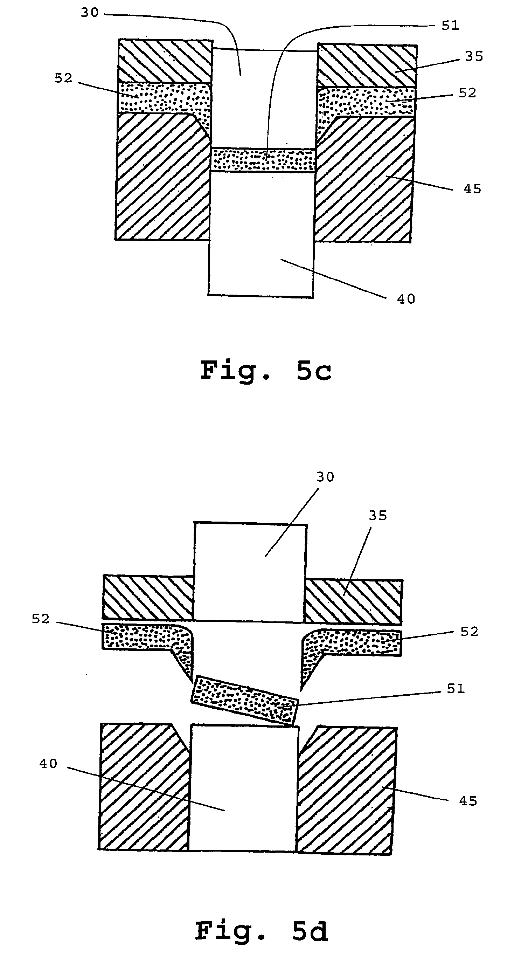

In a third stage, as diagrammatically shown in figure 5c, the blanking portion 51 gets completely detached from the rest portion 52 as a result of the continuing mutual movement. Hereafter, the mould 45 and the supporting member 40 on the one hand, and the guiding plate 35 and the cutting member 30 on the other hand, are moved apart, wherein the contact between the rest portion 52 and the guiding surface 37 is maintained, and wherein the contact between the rest portion 52 and the mould surface 47 is lost.

In a fourth stage, as diagrammatically shown in figure 5d, as a result of the mutual movement of the mould 45 and the supporting member 40 on the one hand, and the guiding plate 35 and the cutting member 30 on the other hand, the rest portion 52 has been put to a position at a distance from the mould surface 47. In this position, the rest portion 52 can be removed. Furthermore, the mould 45 and the supporting member 40 have been moved with respect to each other in such a way that the blanking portion 51 has been put to a position above the level of the mould surface 47, so that the blanking portion 51 can be removed as well. In the process, the supporting member 40 functions as pushing member.

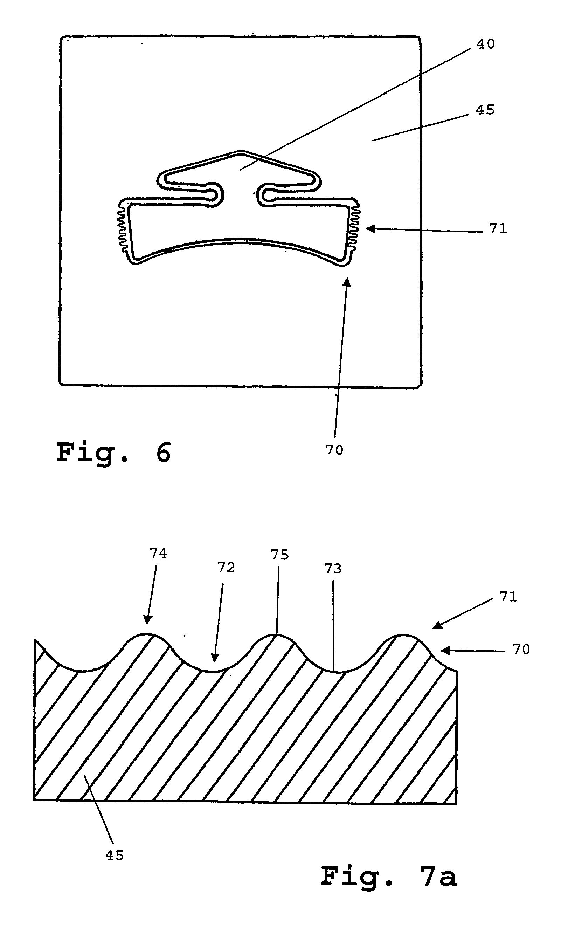

Figure 6 diagrammatically shows a cross-section of a mould 45 and a supporting member 40 which is accommodated in the mould 45, wherein the mould 45 and the supporting member 40 are movably arranged with respect to each other. Both the mould 45 and the supporting member 40 are part of a blanking device 60 which is destined to be applied for the purpose of forming transverse elements 10.

Portions of the inner surface of the receiving space 46 of the mould 45, which are determining in respect of the shape and the dimensions of the pulley sheave contacting surfaces 17 of a transverse element 10 to be blanked, are indicated as relief flanks 70. In the relief flanks 70, a relief 71 is arranged, with which a relief is formed on the pulley sheave contacting surfaces 17 of the transverse element 10 during the blanking process of the transverse element 10. In figure 6, the relief 71 of the relief flanks 70 is depicted in an exaggeratedly large fashion. In general, the relief 71 on the relief flanks 70 comprises alternating ribs and grooves, which are extending parallel with respect to each other, across the relief flanks 70, in a direction which is equal to the direction in which the mould 45 and the supporting member 40 are movable with respect to each other.

According to the state of the art, the relief on the pulley sheave contacting surfaces 17 of the transverse element 10 is corrugated or serrated, and is preferably sine-shaped. Therefore, the relief 71 on the relief flanks 70 of the mould 45, which is used for the purpose of forming such a relief on the pulley sheave contacting surfaces 17 of the transverse element 10, is also serrated or corrugated, and preferably sine-shaped.

The supporting member 40 is accommodated in the receiving space 46 of the mould 45 with a small play. When the mould 45 and the supporting member 40 are moved with respect to each other, guidance of the supporting member 40 also takes place along the relief flanks 70 of the mould 45.

Figure 7a shows a detail of a relief flank 70 of the mould 45 as shown in figure 6, having a known relief 71, such as applied in practice. The relief 71 comprises grooves 72 having concavely curved valley parts 73 and ribs 74 having convexly curved top parts 75, wherein, in the shown example, the various curvatures of the relief 71 are chosen such that this has a substantially sine-shaped cross-section.

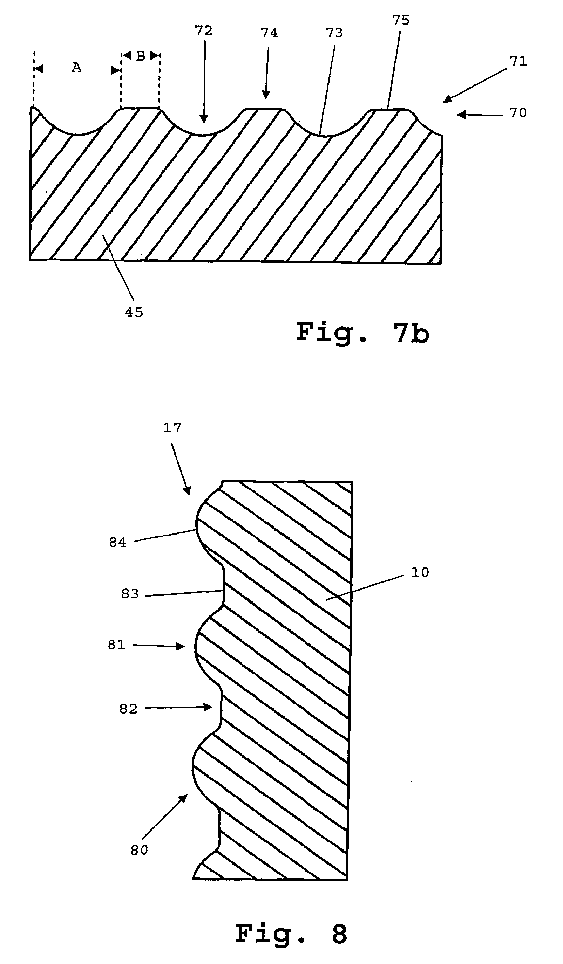

Figure 7b shows a detail of a relief flank 70 of the mould 45 as shown in figure 6, having a relief 71 according to the invention. This relief 71 comprises grooves 72 having concavely curved valley parts 73 and ribs 74 having substantially flat top parts 75. In the example as depicted, the valley parts 73 of the grooves 72 are substantially curved according to a sine, and, in a direction perpendicular to the direction in which the ribs 74 are extending, a mutual distance between the substantially flat top parts 75 of the ribs 74 is substantially twice a dimension of the top parts 75. By way of illustration, in figure 7b, a mutual distance between two substantially flat top parts 75 of the ribs 74 is indicated by a dimension arrow A, and a dimension of the top parts 75 is indicated by a dimension arrow B. On the basis of the figure, it appears that the dimension arrow A is substantially twice as long as the dimension arrow B.

During the blanking process, forces are being exerted on the transverse element 10, wherein it may happen that the transverse element 10 and the underlying supporting member 40 are inclined to tilt. When the relief flanks 70 are provided with a known relief 71 such as shown in figure 7a, the top parts 75 of the ribs 74 are convexly curved, as a result of which a relatively small contacting area between the supporting member 40 and the relief flanks 70 results. Due to this, it is possible that the local pressure which is being exerted on the top parts 75 of the ribs 74 as a consequence of tilting of the supporting member 40 is so high that a local elastic deformation, which is also known as Hertz's compression, of the ribs 74 occurs. This has as a disadvantage that the stiffness of the guidance of the supporting member 40 in the receiving space 46 of the mould 45 decreases.

In case of a relief 71 according to the invention, such as shown in figure 7b, the top parts 75 of the ribs 74 are substantially flat, as a result of which a relatively large contacting area between the supporting member 40 and the relief flanks 70 is obtained. Consequently, the pressure on the top parts 75 of the ribs 74 is locally much smaller than in case of known reliefs 71 having convexly curved top parts 75, of which an example is shown in figure 7a. Therefore, there will be less or no Hertz's compression of the top parts 75 of the ribs 74. Due to this, the stiffness of the guidance of the supporting member 40 in the receiving space 46 of the mould 45 is improved. This has as an advantageous effect that the transverse elements 10 may be formed with a higher accuracy, which is beneficial to the quality of a push belt 6 in which the transverse elements 10 will be arranged.

Figure 8 shows a cross-sectional view of a detail of a pulley sheave contacting surface 17 of a transverse element 10 which is obtained by applying a mould 45 having relief flanks 70 as shown in detail in figure 7b. The pulley sheave contacting surface 17 is provided with a relief 80, which has a pattern of alternating ribs 81 and grooves 82, wherein the ribs 81 and grooves 82 are extending in the longitudinal direction of the transverse element 10, i.e. in a direction substantially perpendicular to the main body surfaces 11, 12 of the transverse element 10. During the blanking process, the ribs 81 and grooves 82 have been formed by the grooves 72 and ribs 74, respectively, which are present on a relief flank 70 of the mould 45. Therefore, the grooves 82 of the relief 80 on the pulley sheave contacting surface 17 have substantially flat valley parts 83, and top parts 84 of the ribs 81 of this relief 80 are substantially curved according to a sine.

When a plurality of transverse elements 10 of the type having a relief 80 as shown in figure 8 are arranged in a push belt 6 of a continuously variable transmission 1, the convex curvature of the top parts 84 of the ribs 81 of the relief 80 are advantageous in view of the process of running-in of the push belt 6 on the pulleys 4, 5, whereas the substantially flat valley parts 83 of the grooves 82 do not play any significant part.

It will be clear to a person skilled in the art that the scope of the present invention is not limited to the examples discussed in the foregoing, but that several amendments and modifications thereof are possible without deviating from the scope of the present invention as defined in the attached claims.

In the foregoing, a method has been described, which is suitable to be applied for the purpose of forming a transverse element 10 which is destined to be part of a push belt 6 for a continuously variable transmission 1, which transverse element 10 has two main body surfaces 11, 12 and a circumferential surface 19. During a blanking movement, the transverse element 10 is blanked out of basic material 50, wherein, among other things, use is made of a supporting member 40 for supporting the transverse element 10, and of a mould 45 having a receiving space 46 for receiving the supporting member 40 and forming the circumferential surface 19 of the transverse element 10. For the purpose of forming pulley sheave contacting surfaces 17 of the transverse element 10, which are part of the circumferential surface 19 of the transverse element 10, and which serve for establishing contact between the transverse element 10 and pulley sheaves of a pulley 4, 5 of the continuously variable transmission 1, an inner surface of the receiving space 46 comprises two relief flanks 70. In order to be capable of forming a relief 80 of alternating ribs 81 and grooves 82 on the pulley sheave contacting surfaces 17, the relief flanks 70 of the mould 45 are also provided with a relief 71, wherein the relief 71 on the relief flanks 70 is a negative of the relief 80 which is formed as a positive on the pulley sheave contacting surface 17, as it were. Therefore, the relief 71 on the relief flanks 70 also comprises alternating ribs 74 and grooves 72.

Important features of the shape of the relief 71 on the relief flanks 70 are the following: valley parts 73 of the grooves 72 are concavely curved, whereas top parts 75 of the ribs 74 are substantially flat. On the basis of the substantially flat shape of the top parts 75 of the ribs 74 it is achieved that a good guidance of the supporting member 40 is obtained during the blanking process, as a result of which, among other things, the accuracy of the shape of the transverse element 10 and the accuracy of the positions of a projection 21 and a hole 22 on the transverse element 10 are increased. On the basis of the concavely curved shape of the valley parts 73 of the grooves 72 it is achieved that top parts 84 of the ribs 81 of the relief 80 on the pulley sheave contacting surfaces 17 of the transverse element 10 are convexly curved, which contributes to a good contact between the pulley sheave contacting surfaces 17 and the pulley sheaves of the pulleys 4, 5 of the continuously variable transmission 1.

## Claims

1. Method for forming a transverse element (10) which is destined to be part of a push belt (6) for a continuously variable transmission (1), wherein the push belt (6) is shaped like a closed loop, and wherein the continuously variable transmission (1) has two pulleys (4, 5) for suspending the push belt (6), which transverse element (10) comprises two main body surfaces (11, 12) and a circumferential surface (19) extending between the main body surfaces (11, 12), wherein the circumferential surface (19) comprises two pulley sheave contacting surfaces (17) for establishing contact between the transverse element (10) and pulley sheaves of a pulley (4, 5) of the continuously variable transmission (1), which pulley sheave contacting surfaces (17) are located at opposite sides of the transverse element (10);
wherein the transverse element (10) is blanked out of basic material (50) during a blanking movement by applying a cutting member (30), a supporting member (40) and a mould (45) having a receiving space (46) for receiving the transverse element (10) to be blanked, the supporting member (40) and an end of the cutting member (30);
wherein, during a blanking movement, the transverse element (10) to be blanked is clamped between the cutting member (30) and the supporting member (40), wherein the cutting member (30), the transverse element (10) to be blanked and the supporting member (40) on the one hand, and the mould (45) on the other hand, are moved with respect to each other;
wherein two relief flanks (70) of the mould (45), which are part of an inner surface of the receiving space (46) in the mould (45), are provided with a relief (71) for forming a predefined relief (80) in the pulley sheave contacting surfaces (17) of the transverse element (10);
wherein the relief (71) in the relief flanks (70) of the mould (45) comprises a pattern of alternating ribs (74) and grooves (72), which are extending in a direction similar to a direction in which the cutting member (30), the transverse element (10) to be blanked and the supporting member (40) on the one hand, and the mould (45) on the other hand, are moved with respect to each other, during a blanking movement; and
**characterized in that** a top part (75) of the ribs (74) is substantially flat, and a valley part (73) of the grooves (72) is concavely curved, wherein, in a direction perpendicular to the direction in which the grooves (72) are extending, a ratio of a mutual distance between the substantially flat top parts (75) of the ribs (74) and a dimension of the substantially flat top parts (75) is substantially 2:1.

2. Method according to claim 1, wherein the concavely curved valley part (73) of the grooves (72) is substantially curved according to a sine, in a direction perpendicular to the direction in which the grooves (72) are extending.

3. Mould (45), destined for application for the purpose of a blanking process in which a transverse element (10) which is destined to be part of a push belt (6) for a continuously variable transmission (1), wherein the push belt (6) is shaped like a closed loop, and wherein the continuously variable transmission (1) has two pulleys (4, 5) for suspending the push belt (6), is blanked out of basic material (50) during a blanking movement, by further applying a cutting member (30) and a supporting member (40), wherein, during a blanking movement, the transverse element (10) to be blanked is clamped between the cutting member (30) and the supporting member (40), wherein the cutting member (30), the transverse element (10) to be blanked and the supporting member (40) on the one hand, and the mould (45) on the other hand, are moved with respect to each other, and wherein the transverse element (10) is formed with pulley sheave contacting surfaces (17) for establishing contact between the transverse element (10) and pulley sheaves of a pulley (4, 5) of the continuously variable transmission (1);
which mould (45) has a receiving space (46) for receiving the transverse element (10) to be blanked, the supporting member (40) and an end of the cutting member (30), wherein two relief flanks (70) of the mould (45), which are part of an inner surface of the receiving space (46), are provided with a relief (71) for forming a predefined relief (80) in the pulley sheave contacting surfaces (17) of the transverse element (10);
wherein the relief (71) in the relief flanks (70) of the mould (45) comprises a pattern of alternating ribs (74) and grooves (72), which are extending in a direction similar to a direction in which the mould (45) is capable of moving with respect to the cutting member (30), the transverse element (10) to be blanked and the supporting member (40) during a blanking movement; and
**characterized in that** a top part (75) of the ribs (74) is substantially flat, and a valley part (73) of the grooves (72) is concavely curved, wherein, in a direction perpendicular to the direction in which the grooves (72) are extending, a ratio of a mutual distance between the substantially flat top parts (75) of the ribs (74) and a dimension of the substantially flat top parts (75) is substantially 2:1.

4. Mould (45) according to claim 3, wherein the concavely curved valley part (73) of the grooves (72) is substantially curved according to a sine, in a direction perpendicular to the direction in which the grooves (72) are extending.

5. Blanking device (60), comprising a mould (45) according to claim 3 or 4.

6. Transverse element (10), destined to be part of a push belt (6) for a continuously variable transmission (1), wherein the push belt (6) is shaped like a closed loop, and wherein the contiguously variable transmission (1) has two pulleys (4, 5) for suspending the push belt (6), which transverse element (10) comprises two main body surfaces (11, 12) and a circumferential surface (19) extending between the main body surfaces (11, 12), wherein the circumferential surface (19) comprises two pulley sheave contacting surfaces (17) for establishing contact between the transverse element (10) and pulley sheaves of a pulley (4, 5) of the continuously variable transmission (1), which pulley sheave contacting surfaces (17) are located at opposite sides of the transverse element (10);
wherein the pulley sheave contacting surfaces (17) are provided with a relief (80) which comprises a pattern of alternating ribs (81) and grooves (82), wherein the ribs (81) and grooves (82) are extending in a direction substantially perpendicular to the main body surfaces (11, 12);
**characterized in that** a valley part (83) of the grooves (82) is substantially flat, and a top part (84) of the ribs (81) is convexly curved, wherein, in a direction perpendicular to the direction in which the grooves (82) are extending, a ratio of a mutual distance between the substantially flat valley parts (83) of the grooves (82) and a dimension of the substantially flat valley parts (83) is substantially 2:1.

7. Transverse element (10) according to claim 6, wherein the concavely curved top part (84) of the ribs (81) is substantially curved according to a sine, in a direction perpendicular to the direction in which the ribs (81) are extending.,

8. Push belt (6) for a continuously variable transmission (1), comprising a transverse element (10) according to claim 6 or 7.

9. Continuously variable transmission (1), comprising a push belt (6) according to claim 8.

## Patentansprüche

1. Verfahren zum Formen eines Querelementes (10), das dazu vorgesehen ist, Teil eines Schubriemens (6) für ein stufenloses Getriebe (1) zu sein, wobei der Schubriemen (6) wie eine geschlossene Schleife geformt ist und wobei das stufenlose Getriebe (1) zwei Riemenscheiben (4, 5) zum Halten des Schubriemens (6) aufweist, wobei das Querelement (10) zwei Hauptkörperflächen (11, 12) und eine sich zwischen den Hauptkörperflächen (11, 12) erstreckende Umfangsfläche (19) umfasst, wobei die Umfangsfläche (19) zwei Riemenscheibenrollenkontaktflächen (17) zum Herstellen von Kontakt zwischen dem Querelement (10) und Riemenscheibenrollen einer Riemenscheibe (4, 5) des stufenlosen Getriebes (1) umfasst, wobei die Riemenscheibenrollenkontaktflächen (17) an gegenüberliegenden Seiten des Querelementes (10) angeordnet sind,
wobei das Querelement (10) während einer Stanzbewegung durch Anwenden eines Stanzgliedes (30), eines Stützteils (40) und einer Gesenkform (45), die einen Aufnahmeraum (46) zum Aufnehmen des auszustanzenden Querelements (10), des Stützteils (40) und eines Endes des Stanzgliedes (30) aufweist, aus Basismaterial (50) ausgestanzt wird,
wobei das auszustanzende Querelement (10) während einer Stanzbewegung zwischen dem Stanzglied (30) und dem Stützteil (40) eingespannt wird, wobei zum einen das Stanzglied (30), das auszustanzende Querelement (10) und das Stützteil (40) und zum anderen die Gesenkform (45) bezüglich einander bewegt werden,
wobei zwei Reliefseiten (70) der Gesenkform (45), die Teil einer Innenfläche des Aufnahmeraums (46) in der Gesenkform (45) sind, mit einem Relief (71) zum Formen eines vorbestimmten Reliefs (80) in den Riemenscheibenrollenkontaktflächen (17) des Querelementes (10) versehen sind,
wobei das Relief (71) in den Reliefseiten (70) der Gesenkform (45) ein Muster aus sich abwechselnden Rippen (74) und Rillen (72) umfasst, die sich in einer Richtung erstrecken, die gleich ist mit einer Richtung, in der während einer Stanzbewegung zum einen das Stanzglied (30), das auszustanzende Querelement (10) und das Stützteil (40) und zum anderen die Gesenkform (45) bezüglich einander bewegt werden, und
**dadurch gekennzeichnet, dass** ein oberer Teil (75) der Rippen (74) im Wesentlichen flach ist und ein Talteil (73) der Rillen (72) konkav gekrümmt ist, wobei in einer Richtung rechtwinklig zu der Richtung, in der sich die Rillen (72) erstrecken, ein Verhältnis eines beidseitigen Abstandes zwischen den im Wesentlichen flachen oberen Teilen (75) der Rippen (74) und einem Abmaß der im Wesentlichen flachen oberen Teile (75) im Wesentlichen 2:1 beträgt.

2. Verfahren nach Anspruch 1, wobei in einer Richtung rechtwinklig zu der Richtung, in der sich die Rillen (72) erstrecken, das konkav gekrümmte Talteil (73) der Rillen (72) im Wesentlichen sinusförmig gekrümmt ist.

3. Gesenkform (45), die vorgesehen ist zur Anwendung zum Zweck eines Stanzprozesses, in dem ein Querelement (10), das dazu vorgesehen ist, Teil eines Schubriemens (6) für ein stufenloses Getriebe (1) zu sein, wobei der Schubriemen (6) wie eine geschlossene Schleife geformt ist und wobei das stufenlose Getriebe (1) zwei Riemenscheiben (4, 5) zum Halten des Schubriemens (6) aufweist, während einer Stanzbewegung aus Basismaterial (50) ausgestanzt wird, indem ferner ein Stanzglied (30) und ein Stützteil (40) eingesetzt werden, wobei das auszustanzende Querelement (10) während einer Stanzbewegung zwischen dem Stanzglied (30) und dem Stützteil (40) eingespannt wird, wobei zum einen das Stanzglied (30), das auszustanzende Querelement (10) und das Stützteil (40) und zum anderen die Gesenkform (45) bezüglich einander bewegt werden, und wobei das Querelement (10) mit Riemenscheibenrollenkontaktflächen (17) zum Herstellen von Kontakt zwischen dem Querelement (10) und den Riemenscheibenrollen einer Riemenscheibe (4, 5) des stufenlosen Getriebes (1) ausgebildet ist,
wobei die Gesenkform (45) einen Aufnahmeraum (46) zum Aufnehmen des auszustanzenden Querelements (10), des Stützteils (40) und eines Endes des Stanzgliedes (30) aufweist, wobei zwei Reliefseiten (70) der Gesenkform (45), die Teil einer Innenfläche des Aufnahmeraums (46) sind, mit einem Relief (71) zum Formen eines vorbestimmten Reliefs (80) in den Riemenscheibenrollenkontaktflächen (17) des Querelementes (10) versehen sind,
wobei das Relief (71) in den Reliefseiten (70) der Gesenkform (45) ein Muster aus sich abwechselnden Rippen (74) und Rillen (72) umfasst, die sich in einer Richtung erstrecken, die gleich ist mit einer Richtung, in der die Gesenkform (45) während einer Stanzbewegung imstande ist sich bezüglich des Stanzgliedes (30), des auszustanzenden Querelementes (10) und des Stützteils (40) zu bewegen, und
**dadurch gekennzeichnet, dass** ein oberer Teil (75) der Rippen (74) im Wesentlichen flach ist und ein Talteil (73) der Rillen (72) konkav gekrümmt ist, wobei in einer Richtung rechtwinklig zu der Richtung, in der sich die Rillen (72) erstrecken, ein Verhältnis eines beidseitigen Abstandes zwischen den im Wesentlichen flachen oberen Teilen (75) der Rippen (74) und einem Abmaß der im Wesentlichen flachen oberen Teile (75) im Wesentlichen 2:1 beträgt.

4. Gesenkform (45) nach Anspruch 3, wobei in einer Richtung rechtwinklig zu der Richtung, in der sich die Rillen (72) erstrecken, das konkav gekrümmte Talteil (73) der Rillen (72) im Wesentlichen sinusförmig gekrümmt ist.

5. Stanzvorrichtung (60), umfassend eine Gesenkform (45) nach Anspruch 3 oder 4.

6. Querelement (10), das dazu vorgesehen ist, Teil eines Schubriemens (6) für ein stufenloses Getriebe (1) zu sein, wobei der Schubriemen (6) wie eine geschlossene Schleife geformt ist und wobei das stufenlose Getriebe (1) zwei Riemenscheiben (4, 5) zum Halten des Schubriemens (6) aufweist, wobei das Querelement (10) zwei Hauptkörperflächen (11, 12) und eine sich zwischen den Hauptkörperflächen (11, 12) erstreckende Umfangsfläche (19) umfasst, wobei die Umfangsfläche (19) zwei Riemenscheibenrollenkontaktflächen (17) zum Herstellen von Kontakt zwischen dem Querelement (10) und Riemenscheibenrollen einer Riemenscheibe (4, 5) des stufenlosen Getriebes (1) umfasst, wobei die Riemenscheibenrollenkontaktflächen (17) an gegenüberliegenden Seiten des Querelementes (10) angeordnet sind,
wobei die Riemenscheibenrollenkontaktflächen (17) mit einem Relief (80) versehen sind, das ein Muster aus sich abwechselnden Rippen (81) und Rillen (82) umfasst, wobei die Rippen (81) und Rillen (82) sich in einer zu den Hauptkörperflächen im Wesentlichen rechtwinkligen Richtung erstrecken,
**dadurch gekennzeichnet, dass** ein Talteil (83) der Rillen (82) im Wesentlichen flach ist und ein oberer Teil (84) der Rippen (81) konvex gekrümmt ist, wobei in einer Richtung rechtwinklig zu der Richtung, in der sich die Rillen (82) erstrecken, ein Verhältnis eines beidseitigen Abstandes zwischen den im Wesentlichen flachen Talteilen (83) der Rillen (82) und einem Abmaß der im Wesentlichen flachen Talteile (83) im Wesentlichen 2:1 beträgt.

7. Querelement (10) nach Anspruch 6, wobei in einer Richtung rechtwinklig zu der Richtung, in der sich die Rippen (81) erstrecken, der konkav gekrümmte obere Teil (84) der Rippen (81) im Wesentlichen sinusförmig gekrümmt ist.

8. Schubriemen (6) für ein stufenloses Getriebe (1), umfassend ein Querelement (10) nach Anspruch 6 oder 7.

9. Stufenloses Getriebe (1), umfassend einen Schubriemen (6) nach Anspruch 8.

## Revendications

1. Procédé de formation d'un élément transversal (10) qui est destiné à faire partie d'une courroie de poussée (6) pour une transmission à variation continue (1), dans lequel la courroie de poussée (6) est en forme de boucle fermée, et dans lequel la transmission à variation continue (1) a deux poulies (4, 5) pour suspendre la courroie de poussée (6), lequel élément transversal (10) comprend deux surfaces de corps principales (11, 12) et une surface circonférentielle (19) s'étendant entre les surfaces de corps principales (11, 12), dans lequel la surface circonférentielle (19) comprend deux surfaces de contact de roue lisse de poulie (17) pour établir un contact entre l'élément transversal (10) et les roues libres d'une poulie (4, 5) de la transmission à variation continue (1), lesquelles surfaces de contact de roue lisse de poulie (17) sont situées sur des côtés opposés de l'élément transversal (10) ;
dans lequel l'élément transversal (10) est découpé dans un matériau de base (50) au cours d'un mouvement de découpe en appliquant un élément de coupe (30), un élément de support (40) et un moule (45) comportant un espace récepteur (46) destiné à recevoir l'élément transversal (10) à découper, l'élément de support (40) et une extrémité de l'élément de coupe (30) ; dans lequel, pendant un mouvement de découpe, l'élément transversal (10) à découper est serré entre l'élément de coupe (30) et l'élément de support (40), dans lequel l'élément de coupe (30), l'élément transversal (10) à découper et l'élément de support (40) d'une part, et le moule (45) d'autre part, sont déplacés les uns par rapport à l'autre ;
dans lequel deux flancs en relief (70) du moule (45), qui font partie d'une surface intérieure de l'espace récepteur (46) du moule (45), sont pourvus d'un relief (71) pour former un relief prédéfini (80) dans les surfaces de contact de roue lisse de poulie (17) de l'élément transversal (10) ;
dans lequel le relief (71) des flancs en relief (70) du moule (45) comprend un motif de nervures (74) et rainures (72) alternées, qui s'étendent dans une direction similaire à une direction dans laquelle l'élément de coupe (30), l'élément transversal (10) à découper et l'élément de support (40) d'une part, et le moule (45) d'autre part, sont déplacés les uns par rapport à l'autre, au cours d'un mouvement de découpe ; et
**caractérisé en ce qu'**une partie supérieure (75) des nervures (74) est substantiellement plate, et une partie de creux (73) des rainures (72) est courbée de façon concave, dans lequel, dans une direction perpendiculaire à la direction dans laquelle s'étendent les rainures (72), le rapport d'une distance mutuelle entre les parties supérieures substantiellement plates (75) des nervures (74) et d'une dimension des parties supérieures substantiellement plates (75) vaut substantiellement 2/1.

2. Procédé selon la revendication 1, dans lequel la partie de creux courbée de façon concave (73) des rainures (72) est courbée substantiellement selon une sinusoïde, dans une direction perpendiculaire à la direction dans laquelle s'étendent les rainures (72).

3. Moule (45), destiné à être appliqué dans un processus de découpe dans lequel un élément transversal (10) qui est destiné à faire partie d'une courroie de poussée (6) pour une transmission à variation continue (1), dans lequel la courroie de poussée (6) est en forme de boucle fermée, et dans lequel la transmission à variation continue (1) a deux poulies (4, 5) pour suspendre la courroie de poussée (6), est découpé dans un matériau de base (50) au cours d'un mouvement de découpe, en appliquant en outre un élément de coupe (30) et un élément de support (40), dans lequel, pendant un mouvement de découpe, l'élément transversal (10) à découper est serré entre l'élément de coupe (30) et l'élément de support (40), dans lequel l'élément de coupe (30), l'élément transversal (10) à découper et l'élément de support (40) d'une part, et le moule (45) d'autre part, sont déplacés les uns par rapport à l'autre, et dans lequel l'élément transversal (10) est pourvu de surfaces de contact de roue lisse de poulie (17) pour établir un contact entre l'élément transversal (10) et les roues libres d'une poulie (4, 5) de la transmission à variation continue (1) ;
lequel moule (45) comporte un espace récepteur (46) destiné à recevoir l'élément transversal (10) à découper, l'élément de support (40) et une extrémité de l'élément de coupe (30), dans lequel deux flancs en relief (70) du moule (45), qui font partie d'une surface intérieure de l'espace récepteur (46), sont pourvus d'un relief (71) pour former un relief prédéfini (80) dans les surfaces de contact de roue lisse de poulie (17) de l'élément transversal (10) ;
dans lequel le relief (71) des flancs en relief (70) du moule (45) comprend un motif de nervures (74) et rainures (72) alternées, qui s'étendent dans une direction similaire à une direction dans laquelle le moule (45) est capable de se déplacer par rapport à l'élément de coupe (30), l'élément transversal (10) à découper et l'élément de support (40) au cours d'un mouvement de découpe ; et
**caractérisé en ce qu'**une partie supérieure (75) des nervures (74) est substantiellement plate, et une partie de creux (73) des rainures (72) est courbée de façon concave, dans lequel, dans une direction perpendiculaire à la direction dans laquelle s'étendent les rainures (72), le rapport d'une distance mutuelle entre les parties supérieures substantiellement plates (75) des nervures (74) et d'une dimension des parties supérieures substantiellement plates (75) vaut substantiellement 2/1.

4. Moule (45) selon la revendication 3, dans lequel la partie de creux courbée de façon concave (73) des rainures (72) est courbée substantiellement selon une sinusoïde, dans une direction perpendiculaire à la direction dans laquelle s'étendent les rainures (72).

5. Dispositif de découpe (60) comprenant un moule (45) selon la revendication 3 ou 4.

6. Elément transversal (10) destiné à faire partie d'une courroie de poussée (6) pour une transmission à variation continue (1), dans lequel la courroie de poussée (6) est en forme de boucle fermée, et dans lequel la transmission à variation continue (1) a deux poulies (4, 5) pour suspendre la courroie de poussée (6), lequel élément transversal (10) comprend deux surfaces de corps principales (11, 12) et une surface circonférentielle (19) s'étendant entre les surfaces de corps principales (11, 12), dans lequel la surface circonférentielle (19) comprend deux surfaces de contact de roue lisse de poulie (17) pour établir un contact entre l'élément transversal (10) et les roues libres d'une poulie (4, 5) de la transmission à variation continue (1), lesquelles surfaces de contact de roue lisse de poulie (17) sont situées sur des côtés opposés de l'élément transversal (10) ;
dans lequel les surfaces de contact de roue lisse de poulie (17) sont pourvues d'un relief (80) qui comprend un motif de nervures (81) et rainures (82) alternées, dans lequel les nervures (81) et les rainures (82) s'étendent dans une direction substantiellement perpendiculaire aux surfaces de corps principales (11, 12) ;
**caractérisé en ce qu'**une partie de creux (83) des rainures (82) est substantiellement plate, et une partie supérieure (84) des nervures (81) est courbée de façon convexe, dans lequel, dans une direction perpendiculaire à la direction dans laquelle s'étendent les rainures (82), le rapport d'une distance mutuelle entre les parties de creux substantiellement plates (83) des rainures (82) et d'une dimension des parties de creux substantiellement plates (83) vaut substantiellement 2/1.

7. Elément transversal (10) selon la revendication 6, dans lequel la partie supérieure courbée de façon concave (84) des nervures (81) est courbée substantiellement selon une sinusoïde, dans une direction perpendiculaire à la direction dans laquelle s'étendent les nervures (81).

8. Courroie de poussée (6) pour transmission à variation continue (1), comprenant un élément transversal (10) selon la revendication 6 ou 7.

9. Transmission à variation continue (1), comprenant une courroie de poussée (6) selon la revendication 8.
